(19)

**Europäisches Patentamt**
**European Patent Office**
**Office européen des brevets**

(11) **EP 2 787 778 A1**

(12) **EUROPEAN PATENT APPLICATION**

(43) Date of publication:
**08.10.2014 Bulletin 2014/41**

(21) Application number: **14163309.9**

(22) Date of filing: **03.04.2014**

(51) Int Cl.:
**H04W 52/14** (2009.01)     **H04W 52/24** (2009.01)
**H04W 52/32** (2009.01)     **H04W 72/04** (2009.01)
**H04W 72/12** (2009.01)     **H04W 52/58** (2009.01)
**H04W 52/08** (2009.01)     **H04W 72/14** (2009.01)
**H04W 92/16** (2009.01)     **H04W 52/10** (2009.01)
**H04W 52/22** (2009.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.04.2013 PCT/CN2013/073709**

(71) Applicant: **Nokia Solutions and Networks Oy 02610 Espoo (FI)**

(72) Inventors:
• **Yao, Chun Hai**
  **100102 Beijing (CN)**
• **Lei, Hai Peng**
  **100028 Beijing (CN)**

(54) **Uplink power control enhancement for dynamic time division duplex uplink-downlink reconfiguration**

(57) Systems, methods, apparatuses, and computer program products for power control enhancement are provided. One method includes retrieving, by an eNB, subframe type information in connection with uplink (UL) /downlink (DL) configuration. The method then includes simultaneously indicating, using physical layer signaling, at least one of the subframe type information and/or corresponding power control parameter set to a user equipment. In one example, the subframe type information and/or the corresponding power control parameter set may be indicated in reused bits of a transmit power command (TPC).

Fig. 9a

*Retrieving subframe type information* — 900

*Indicating the subframe type and corresponding power control parameter set to UE* — 910

*Selectively accumulating power adjustment* — 920

EP 2 787 778 A1

**Description**

BACKGROUND:

**Field:**

Embodiments of the invention generally relate to wireless communications networks, such as, but not limited to, the Universal Mobile Telecommunications System (UMTS) Terrestrial Radio Access Network (UTRAN), Long Term Evolution (LTE) Evolved UTRAN (E-UTRAN), and/or LTE-A.

**Description of the Related Art:**

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN) no RNC exists and most of the RNC functionalities are contained in the eNodeB (enhanced Node B).

Long Term Evolution (LTE) or E-UTRAN refers to improvements of the UMTS through improved efficiency and services, lower costs, and use of new spectrum opportunities. In particular, LTE is a 3GPP standard that provides for uplink peak rates of at least 50 megabits per second (Mbps) and downlink peak rates of at least 100 Mbps. LTE supports scalable carrier bandwidths from 20 MHz down to 1.4 MHz and supports both Frequency Division Duplexing (FDD) and Time Division Duplexing (TDD).

As mentioned above, LTE is also expected to improve spectral efficiency in 3G networks, allowing carriers to provide more data and voice services over a given bandwidth. Therefore, LTE is designed to fulfill future needs for high-speed data and media transport in addition to high-capacity voice support. Advantages of LTE are, for example, high throughput, low latency, FDD and TDD support in the same platform, an improved end-user experience, and a simple architecture resulting in low operating costs.

Further releases of 3GPP LTE (e.g., LTE Rel-10, LTE Rel-11, LTE Rel-12) are targeted towards future international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A will be a more optimized radio system fulfilling the international telecommunication union-radio (ITU-R) requirements for IMT-Advanced while keeping the backward compatibility.

SUMMARY:

One embodiment is directed to a method that includes retrieving, by an eNB, subframe type information in connection with uplink (UL)/downlink (DL) configuration. The method may then include simultaneously indicating, using physical layer signaling, the subframe type information and corresponding power control parameter set to a user equipment. In one example, the subframe type information and the corresponding power control parameter set may be indicated in reused bits of a transmit power command (TPC).

Another embodiment is directed to an apparatus. The apparatus includes at least one processor and at least one memory comprising computer program code. The at least one memory and the computer program code configured, with the at least one processor, to cause the apparatus at least to retrieve subframe type information in connection with uplink (UL)/downlink (DL) configuration, and to simultaneously indicate, using physical layer signaling, the subframe type information and corresponding power control parameter set to a user equipment.

Another embodiment is directed to a computer program, embodied on a computer readable medium, wherein the computer program is configured to control a processor to perform a process. The process includes retrieving subframe type information in connection with uplink (UL)/downlink (DL) configuration. The process may then include simultaneously indicating, using physical layer signaling, the subframe type information and corresponding power control parameter set to a user equipment.

Another embodiment is directed to a method including receiving from an eNB, by a user equipment, an indication of subframe type information and corresponding power control parameter set. The method may then include deriving required uplink (UL) transmit power based on the received power control parameter set and the corresponding power control parameter set, and transmitting on physical uplink shared channel (PUSCH) or physical uplink control channel (PUCCH) using the derived UL transmit power.

Another embodiment is directed to an apparatus. The apparatus includes at least one processor and at least one memory comprising computer program code. The at least one memory and the computer program code configured, with the at least one processor, to cause the apparatus at least to receive, from an eNB, an indication of subframe type information and corresponding power control parameter set. The at least one memory and the computer program code are further configured, with the at least one processor, to cause the apparatus to derive required uplink (UL) transmit power based on the received power control parameter set and the corresponding power control parameter set, and to transmit on physical uplink shared channel (PUSCH) or physical uplink control channel (PUCCH) using the derived UL transmit power.

Another embodiment is directed to a computer program, embodied on a computer readable medium, wherein the computer program is configured to control a processor to perform a process. The process includes receiving, from an eNB, an indication of subframe type information and corresponding power control parameter set. The process may then include deriving required uplink (UL) transmit power based on the received power control parameter set and the corresponding power control parameter set, and transmitting on physical uplink shared channel (PUSCH) or physical uplink control channel (PUCCH) using the derived UL transmit power.

BRIEF DESCRIPTION OF THE DRAWINGS:

For proper understanding of the invention, reference should be made to the accompanying drawings, wherein:

Fig. 1 illustrates the seven current kinds of TDD UL/DL configurations;

Fig. 2 illustrates an example of UL-DL interference caused by dynamic TDD UL/DL reconfiguration, according to an embodiment;

Fig. 3 illustrates an example of subframe type, according to one embodiment;

Fig. 4 illustrates another example of subframe type, according to one embodiment;

Fig. 5 illustrates an example of the bit mapping of reusing TPC bits in DL/UL grant, according to an embodiment;

Fig. 6 illustrates an example of the subframe types, according to another embodiment;

Fig. 7 illustrates an example of the bit mapping of reusing TPC bits in DL/UL grant, according to one embodiment;

Fig. 8a illustrates an example of an apparatus, according to an embodiment;

Fig. 8b illustrates an example of an apparatus, according to another embodiment;

Fig. 9a illustrates an example of a flow diagram of a method, according to one embodiment; and

Fig. 9b illustrates an example of a flow diagram of a method, according to another embodiment.

DETAILED DESCRIPTION:

It will be readily understood that the components of the invention, as generally described and illustrated in the figures herein, may be arranged and designed in a wide variety of different configurations. Thus, the following detailed description of the embodiments of systems, methods, apparatuses, and computer program products for power control enhancement as represented in the attached figures, is not intended to limit the scope of the invention, but is merely representative of selected embodiments of the invention.

If desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

Certain embodiments of the present invention relate to LTE-Advanced (LTE-A) technology, such as that described in 3GPP Release 12 (Rel-12) and beyond. More specifically, some embodiments relate to LTE TDD enhancement for DL-UL interference management and traffic adaptation (TDD_eIMTA).

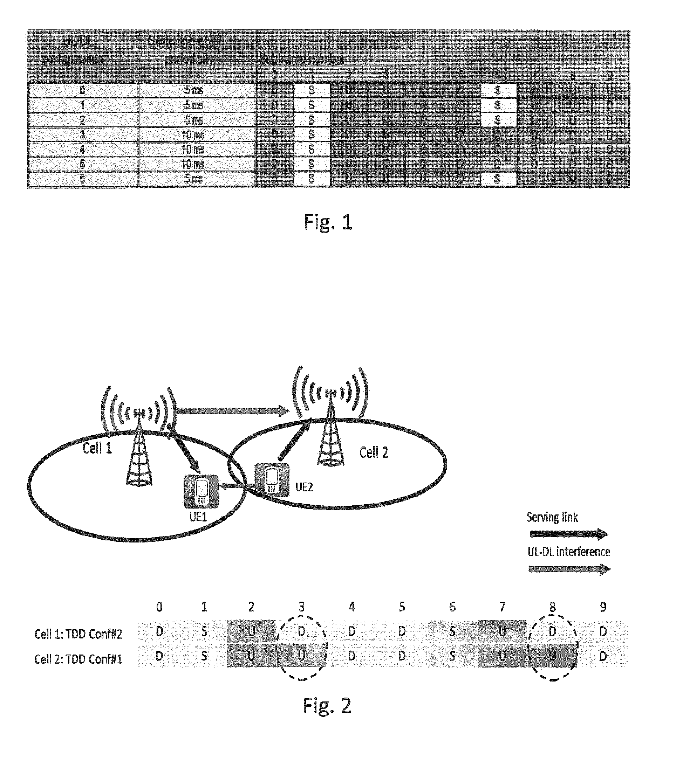

Currently, LTE TDD allows for asymmetric UL-DL allocations by providing seven different semi-statically configured TDD UL-DL configurations. Fig. 1 illustrates the seven current kinds of TDD UUDL configurations. These allocations can provide between 40% and 90% DL subframes. A current mechanism for adapting UL-DL allocation is based on the system information change procedure with 640ms period. The concrete TDD UUDL configuration is semi-statically informed by system information block 1 (SIB-1) signaling.

Dynamic TDD UL/DL reconfiguration is a feature for LTE Rel-12 or beyond, which seeks to realize the flexibility to have dynamic TDD UUDL configuration in a TDD system to match the uplink and downlink traffic variation.

Implementation of dynamic TDD UL-DL reconfiguration may require interference mitigation schemes to ensure coexistence of different TDD UL-DL configurations in the system. If dynamic TDD UL/DL reconfiguration is directly adopted in LTE systems including both homogeneous networks and heterogeneous networks, it may cause severe UL-DL interference in the conflicting subframes due to independent and different TDD UUDL configurations in neighboring cells, such as eNB-to-eNB interference and UE-to-UE interference, which is illustrated in the example of Fig. 2. In the example of Fig. 2, it is assumed that Cell 1 is configured with TDD UL/DL configuration 2 and Cell 2 is configured with TDD UUDL configuration 1. As a result, subframe 3 and subframe 8 are conflicting subframes where UL-DL interference will happen. This kind of UL-DL interference may have a significant impact on UL Signal to Interference plus Noise Ratio (SINR) when the eNBs are located in line of sight (LOS) or located close to each other, or on DL SINR when the UEs are located in the cell edge.

The Macro-Pico scenario may be one of the most challenging scenarios, considering the interference from Macro cells' downlink transmission to Pico cells' uplink receiving, especially when the Macro cell and Pico cell are operated on the same carrier. For the purpose of wide area coverage, a Macro eNB uses high transmission power in downlink which causes severe interference to Pico cells' uplink transmission when the Macro cell and Pico cell have opposite transmission directions. On the other hand, since Pico cells have a high probability to select DL-heavy configuration due to the asymmetric feature of traffic in downlink and uplink, Pico cells' downlink transmission will also cause severe interference to Macro cell's uplink transmission. A significantly decreased UL packet throughput has been observed for both Macro and Pico cells if no interference mitigation scheme is adopted.

An additional problem caused by dynamic TDD UUDL reconfiguration is UL ACk/NACk (A/N) feedback reliability. For example, in Fig. 2, if A/N feedback for UE 2 in Cell 2 is transmitted on the conflicting subframes (e.g., subframes 3 and 8), high interference from DL transmission of Cell 1 eNB decreases the reliability of hybrid automatic repeat request (HARQ) feedback, which will degrade the system performance and prevent receiving benefits from dynamic TDD UUDL reconfiguration for traffic adaptation. Accordingly, the reliability of UL A/N feedback should be improved.

Performance gain of dynamic TDD UUDL reconfiguration may mainly appear in case of low or medium traffic load. So in the multi-cell scenario, the low load traffic case usually emerges in burst, which results in drastic fluctuation of interference. Especially for flexible subframes, since those may have opposite directions among neighboring cells, it will lead to great interference fluctuation in flexible subframes. Current UL power control mechanisms cannot adapt to such great fluctuation and significant UL performance loss is caused.

As a result, current uplink power control mechanism(s) need to be enhanced such that dynamic TDD UL/DL reconfiguration in small cells is not prohibited due to severe eNB-to-eNB interference.

Currently, uplink power control has been specified in TS36.213 since LTE Rel-8. For the physical uplink shared channel (PUSCH), the setting of the UE Transmit power $P_{PUSCH}$ for the PUSCH transmission in subframe $i$ is defined by:

$$P_{PUSCH}(i) = \min\{P_{CMAX}, 10\log_{10}(M_{PUSCH}(i)) + P_{O\_PUSCH}(j) + \alpha(j) \cdot PL + \Delta_{TF}(i) + f(i)\} \text{ [dBm]}$$

where, $\delta_{PUSCH}$ is a UE specific correction value, which is also referred to as a transmit power command (TPC), and is included in physical downlink control channel (PDCCH) with downlink control information (DCI) format 0 or jointly coded with other TPC commands in PDCCH with DCI format 3/3A whose cyclic redundancy check (CRC) parity bits are scrambled with TPC-PUSCH-RNTI (Radio Network Temporary Identifier).

The current PUSCH power control adjustment state is given by $f(i)$ which is defined by: $f(i)=f(i-1)+\delta_{PUSCH}(i-K_{PUSCH})$ if accumulation is enabled based on the UE-specific parameter *Accumulation-enabled* provided by higher layers or if the TPC command $\delta_{PUSCH}$ is included in a PDCCH with DCI format 0 where the CRC is scrambled by the Temporary C-RNTI; or $f(i)=\delta_{PUSCH}(i-K_{PUSCH})$ if accumulation is not enabled based on the UE-specific parameter *Accumulation-enabled* provided by higher layers.

For the physical uplink control channel (PUCCH), the setting of the UE transmit power $P_{PUCCH}$ for PUCCH transmission in subframe $i$ is defined by:

$$P_{\text{PUCCH}}(i) = \min\left\{P_{\text{CMAX}}, P_{0\_\text{PUCCH}} + PL + h(n_{CQI}, n_{HARQ}) + \Delta_{\text{F\_PUCCH}}(F) + g(i)\right\} \text{ [dBm]}$$

where $\delta_{\text{PUCCH}}$ is a UE specific correction value, which is also referred to as a TPC command, included in a PDCCH with DCI format 1A/1B/1D/1/2A/2 or sent jointly coded with other UE specific PUCCH correction values on a PDCCH with DCI format 3/3A whose CRC parity bits are scrambled with TPC-PUCCH-RNTI; and

$$g(i) = g(i-1) + \sum_{m=0}^{M-1} \delta_{\text{PUCCH}}(i - k_m)$$ where g(i) is the current PUCCH power control adjustment state.

In view of the above, certain embodiments provide uplink power control enhancement schemes for dynamic TDD UUDL reconfiguration. Some embodiments target UL-DL interference mitigation to overcome the eNB-to-eNB interference in order to improve the uplink performance. As will be discussed below, certain embodiments provide additional higher layer power control parameters and re-interpret the transmit power command (TPC) in uplink (UL) and downlink (DL) assignment index (DAI) to enhance the UL power control performance for different subframe sets.

In a first embodiment, the following two types of UL subframes can be defined:

- Type 1: non-conflicting subframes that have the same transmission direction (UL) between neighboring cells.
- Type 2: conflicting subframes that have the opposite transmission direction between neighboring cells.

According to this embodiment, the TDD UL/DL configurations may need to be exchanged periodically in synchronized or asynchronized manner between neighboring cells in order to know the subframe type. Alternatively, the subframe type can be obtained by eNB measurement. It is noted that, according to this embodiment, the types of some subframes may be changed after the TDD UL/DL configuration is exchanged.

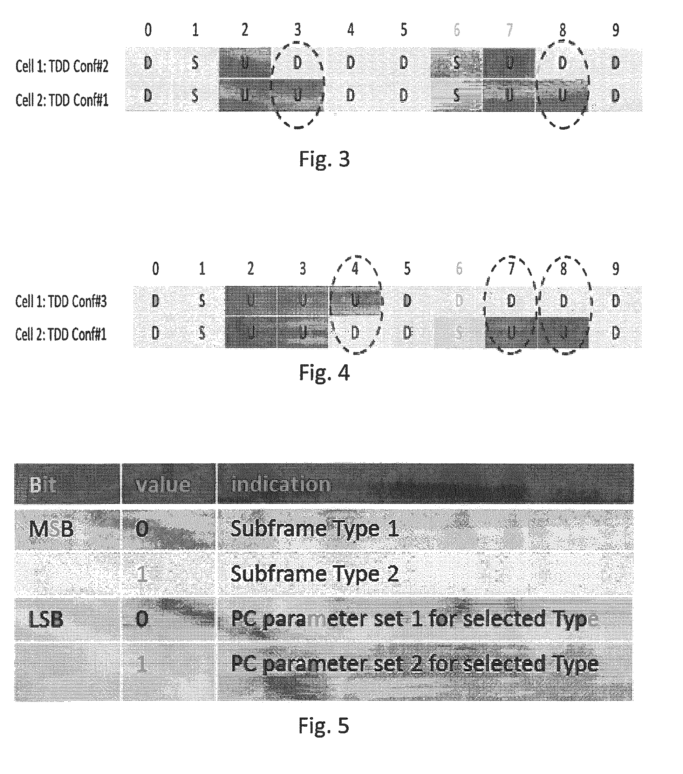

Fig. 3 illustrates an example of subframe type, according to this embodiment. As illustrated in Fig. 3, if TDD UL/DL configuration 2 and configuration 1 are adopted by two neighboring cells (e.g., Cell 1 adopts configuration 2, and Cell 2 adopts configuration 1), then subframe 3 and 8 are Type 2 (conflicting) subframes because those transmission directions are opposite between neighboring cells. The other subframes are Type 1 (non-conflicting) since they have the same transmission direction between neighboring cells.

However, as illustrated in Fig. 4, if Cell 1 changes its TDD UL/DL configuration by switching, for example, to TDD UL/DL configuration 3, then subframes 4, 7 and 8 are now Type 2 (conflicting) subframes, while the other subframes are Type 1 (non-conflicting). Since the eNB always knows the TDD UUDL configuration, the eNB can indicate the subframe type to UE.

According to this embodiment, two different uplink power control parameter sets (P0, alpha) may be configured by high layer signalling for each of the two subframe types. For example, for subframe Type 1 (non-conflicting), the power control parameter set can be set to Set 1 (P0: -80dBm, alpha: 0.6), Set 2 (P0: -76dBm, alpha: 0.8); for subframe Type 2 (conflicting), the power control parameter set can be set to Set 1 (P0: -70dBm, alpha: 0.8), Set 2 (P0: -66dBm, alpha: 1.0).

In this embodiment, the eNB may indicate the subframe type and power control parameter set to the UE by reusing TPC bits contained in DL grant or UL grant. Fig. 5 illustrates an example of the bit mapping of reusing TPC bits in DL/UL grant, according to this embodiment. In one example, the eNB jointly indicates the corresponding subframe type and the selected power control parameter set in UL grant or DL grant by reusing two bits of TPC. For example, one bit may be used for subframe type indication and another bit may be used for power control parameter set indication.

At the UE, upon receiving the TPC bits in UL grant or DL grant, the UE knows the corresponding UL subframe type according to the UL grant timing or DL HARQ timing and derive the needed UL transmit power with the indicated UL power control parameter set (and the power adjustment step with TPC command in DCI format 3/3A) to transmit the PUSCH or PUCCH.

The setting of the UE Transmit power $P_{\text{PUSCH}}$ for PUSCH transmission in subframe $i$ is defined by:

if Subframe i is Type 1 (non-conflicting) subframe and power control parameter set 1 is selected,

$$P_{\text{PUSCH\_Type1}}(i) = \min\{P_{\text{CMAX}}, 10\log_{10}(M_{\text{PUSCH}}(i)) + P_{\text{O\_PUSCH\_Type1\_1}}(j) + \alpha_{Type1\_1}(j) \cdot PL + \Delta_{\text{TF}}(i) + f(i)\}$$
[dBm]

else if Subframe i is Type 1 (non-conflicting) subframe and power control parameter set 2 is selected,

$$P_{\text{PUSCH\_Type1}}(i) = \min\{P_{\text{CMAX}}, 10\log_{10}(M_{\text{PUSCH}}(i)) + P_{\text{O\_PUSCH\_Type1\_2}}(j) + \alpha_{Type1\_2}(j) \cdot PL + \Delta_{\text{TF}}(i) + f(i)\}$$
[dBm]

else if Subframe i is Type 2 (conflicting) subframe and power control parameter set 1 is selected,

$$P_{\text{PUSCH\_Type2}}(i) = \min\{P_{\text{CMAX}}, 10\log_{10}(M_{\text{PUSCH}}(i)) + P_{\text{O\_PUSCH\_Type2\_1}}(j) + \alpha_{Type2\_1}(j) \cdot PL + \Delta_{\text{TF}}(i) + f(i)\}$$
[dBm]

else if Subframe i is Type 2 (conflicting) subframe and power control parameter set 2 is selected,

$$P_{\text{PUSCH\_Type2}}(i) = \min\{P_{\text{CMAX}}, 10\log_{10}(M_{\text{PUSCH}}(i)) + P_{\text{O\_PUSCH\_Type2\_2}}(j) + \alpha_{Type2\_2}(j) \cdot PL + \Delta_{\text{TF}}(i) + f(i)\}$$
[dBm]

where $f(i)$ is defined by: $f(i)=f(i-1)+\delta_{PUSCH}(i-K_{PUSCH})$ if accumulation is enabled based on the UE-specific parameter *Accumulation-enabled* provided by higher layers; $f(i)=\delta_{PUSCH}(i-K_{PUSCH})$ if if accumulation is not enabled based on the UE-specific parameter *Accumulation-enabled* provided by higher layers; and subframe $i$ and $i$-1 are in same subframe type set. In this embodiment, $\delta_{PUSCH}$ is a UE specific correction value in PDCCH with DCI format 3/3A whose CRC parity bits are scrambled with TPC-PUSCH-RNTI.

In this embodiment, the setting of the UE Transmit power $P_{PUCCH}$ for PUCCH transmission in subframe i is defined according to subframe type and power control parameter set selection. It is similar to PUSCH power derivation, with alpha being always set to 1.0 for PUCCH. In other words, in this example, for deriving the PUCCH transmit power the alpha is always set to 1.

For PUSCH transmission, TPC in DCI format 3/3A with CRC scrambled by TPC-PUSCH-RNTI may be further used for uplink transmission power adjustment. So, if UL grant together with DCI format 3/3A are both detected in the same downlink subframe, then the UE shall use the $\delta_{PUSCH}$ provided in DCI format 3/3A.

For PUCCH transmission, TPC bits contained in DL grant with DAI=1 may be used as real UL transmission power adjustment command. While all TPC bits contained in DL grant with DAI>1 are reused as the subframe type indication and power control parameter set indication as mentioned above; in the situation where only one subframe is scheduled (i.e., DAI=1) within bundle window size larger than 1, the TPC bits are reused as subframe type indication and power control parameter indication. Alternatively, TPC bits contained in DL grant with DAI=1 are used for subframe type indication and power control parameter indication, while all TPC bits contained in DL grant with DAI>1 are used as real transmit power adjustment command. When the DL subframe with bundle window size is equal to 1, DCI format 3/3A with CRC scrambled by TPC-PUCCH-RNTI may be further used for UL transmission power adjustment. So, if DL grant with bundle window size equal to 1 and DCI format 3/3A are both detected in the same downlink subframe, then the UE shall use the $\delta_{PUSCH}$ provided in DCI format 3/3A.

In this embodiment, if power adjustment accumulation is enabled, the accumulation should limit in the same type of UL subframe set.

In a second embodiment, the following two types of UL subframes can be defined:

- Type 1: fixed subframes that always have the fixed transmission direction (UL) in currently specified seven TDD UUDL configurations, such as Subframe 2.
- Type 2: flexible subframes in which transmission directions can be changed in different TDD UUDL configurations, such as Subframe 3, 4, 7, 8, 9.

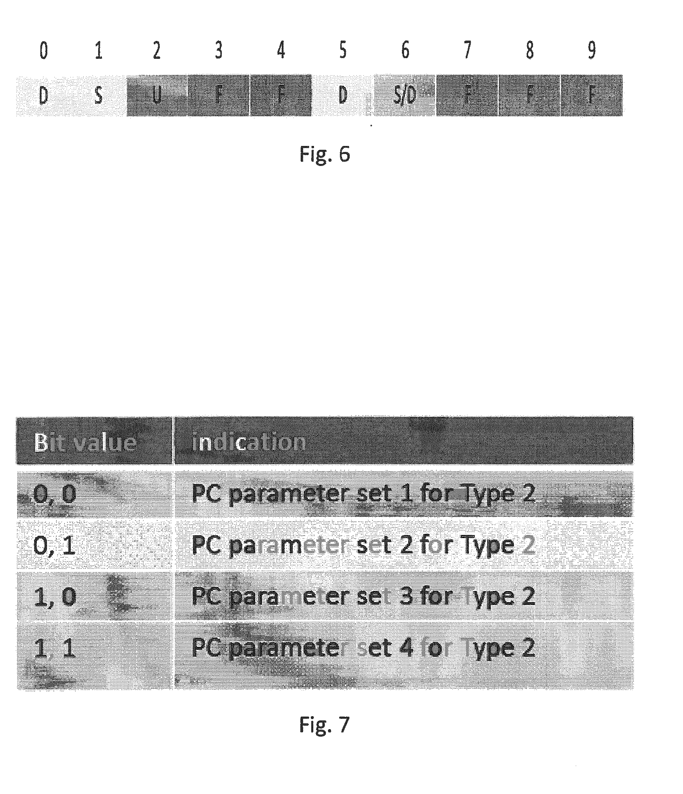

Fig. 6 illustrates an example of the subframe types, according to this embodiment. According to this embodiment, the UE always knows the subframe type of the practically used TDD UUDL configuration and no exchange between cells is needed in order for the UE to know the subframe type. It is noted that, according to this embodiment, the types of some subframes is not changed after the TDD UL/DL configuration is changed.

According to this embodiment, four different power control parameter sets (P0, alpha) may be configured by high layer signaling for Type 2 (flexible) subframes, and one of those can be configured for Type 1 (fixed) subframes. For example, for subframe Type 2 (flexible), the power control parameter set can be set to Set 1 (P0: -80dBm, alpha: 0.6), Set 2 (P0: -76dBm, alpha: 0.8), Set 3 (P0: -70dBm, alpha: 0.8), Set 4 (P0: -66dBm, alpha: 1.0). Set 2 can be used for subframe Type 1 (fixed). In this embodiment, for Type 1 (fixed) subframes, the current power control mechanism may be used with two-bit TPC used as the transmit power adjustment command. In this embodiment, for Type 2 (flexible) subframes, one of the four power control parameter sets is indicated in DL grant or UL grant by, for example, reusing TPC bits to change UE UL transmit power in a large dynamic range. Fig. 7 illustrates an example of the bit mapping of reusing TPC bits in DUUL grant for this embodiment.

According to this embodiment, for Type 1 (fixed) subframe, the eNB indicates the TPC command in UL grant or DL grant for uplink transmit power adjustment and current power control mechanism (discussed above) is used. According to this embodiment, for Type 2 (flexible) subframe, the eNB indicates the selected power control parameter set in UL grant or DL grant by reusing two-bit TPC as the set index.

In this embodiment, upon receiving the TPC bits in the UL grant or DL grant, the UE knows the corresponding UL subframe type according to the UL grant timing or DL HARQ timing and derives the needed UL transmit power with the indicated UL power control parameter set (and the power adjustment step with TPC command in DCI format 3/3A) to transmit the PUSCH or PUCCH.

According to this embodiment, the setting of the UE Transmit power $P_{\text{PUSCH}}$ for PUSCH transmission in subframe $i$ is defined by:

if Subframe i is Type 2 (flexible) subframe and power control parameter set 1 is selected,

$$P_{\text{PUSCH\_Type2}}(i) = \min\{P_{\text{CMAX}}, 10\log_{10}(M_{\text{PUSCH}}(i)) + P_{\text{O\_PUSCH\_Type2\_1}}(j) + \alpha_{Type2\_1}(j) \cdot PL + \Delta_{\text{TF}}(i) + f(i)\}$$
[dBm]

else if Subframe i is Type 2 (flexible) subframe and power control parameter set 2 is selected,

$$P_{\text{PUSCH\_Type2}}(i) = \min\{P_{\text{CMAX}}, 10\log_{10}(M_{\text{PUSCH}}(i)) + P_{\text{O\_PUSCH\_Type2\_2}}(j) + \alpha_{Type2\_2}(j) \cdot PL + \Delta_{\text{TF}}(i) + f(i)\}$$
[dBm]

else if Subframe i is Type 2 (flexible) subframe and power control parameter set 3 is selected,

$$P_{\text{PUSCH\_Type2}}(i) = \min\{P_{\text{CMAX}}, 10\log_{10}(M_{\text{PUSCH}}(i)) + P_{\text{O\_PUSCH\_Type2\_3}}(j) + \alpha_{Type2\_3}(j) \cdot PL + \Delta_{\text{TF}}(i) + f(i)\}$$
[dBm]

else if Subframe i is Type 2 (flexible) subframe and power control parameter set 4 is selected,

$$P_{\text{PUSCH\_Type2}}(i) = \min\{P_{\text{CMAX}}, 10\log_{10}(M_{\text{PUSCH}}(i)) + P_{\text{O\_PUSCH\_Type2\_4}}(j) + \alpha_{Type2\_4}(j) \cdot PL + \Delta_{\text{TF}}(i) + f(i)\}$$
[dBm]

where $f(i)$ is defined by: $f(i)=f(i-1)+\delta_{PUSCH}(i-K_{PUSCH})$ if accumulation is enabled based on the UE-specific parameter *Accumulation-enabled* provided by higher layers; $f(i)=\delta_{PUSCH}(i-K_{PUSCH})$ if accumulation is not enabled based on the UE-specific parameter *Accumulation-enabled* provided by higher layers; and subframe $i$ and $i$-1 are in same subframe type set. In this embodiment, $\delta_{PUSCH}$ is a UE specific correction value in PDCCH with DCI format 3/3A whose CRC parity bits are scrambled with TPC-PUSCH-RNTI.

Therefore, according to this embodiment, the setting of the UE Transmit power $P_{\text{PUCCH}}$ for PUCCH transmission in subframe i is defined according to subframe type and power control parameter set selection. It is similar to PUSCH power derivation, with the difference that alpha always is set to 1.0 for PUCCH. In other words, for deriving the PUCCH transmit power the alpha is always set to 1.

In this embodiment, for PUSCH transmission, TPC in DCI format 3/3A with CRC scrambled by TPC-PUSCH-RNTI may be further used for uplink transmission power adjustment. Thus, if UL grant together with DCI format 3/3A are both detected in the same downlink subframe, then the UE can use the $\delta_{PUSCH}$ provided in DCI format 3/3A.

In this embodiment, for PUCCH transmission, TPC bits contained in DL grant with DAI=1 are used as real UL transmission power adjustment command. While all TPC bits contained in DL grant with DAI>1 are reused as subframe type indication and power control parameter indication, as mentioned above; when only one subframe is scheduled (i.e. DAI=1) within bundle window size larger than 1, the TPC bits are reused as subframe type indication and power control parameter indication. Alternatively, TPC bits contained in DL grant with DAI=1 are used for subframe type indication and power control parameter indication while all TPC bits contained in DL grant with DAI>1 are used as real transmit power adjustment command. When the DL subframe with bundle window size is equal to 1, DCI format 3/3A with CRC scrambled by TPC-PUCCH-RNTI may be further used for uplink transmission power adjustment. So, if DL grant with bundle window size equal to 1 and DCI format 3/3A are both detected in the same downlink subframe, then the UE shall use the $\delta_{PUSCH}$ provided in DCI format 3/3A.

In this embodiment, if power adjustment accumulation is enabled, the accumulation should limit in the same type of UL subframe set.

In a third embodiment, the following two types of UL subframes can be defined:

- Type 1: fixed subframes that always have the fixed UL transmission direction in currently specified seven TDD UL/DL configurations, i.e., Subframe 2. If dynamic TDD UUDL reconfiguration is limited to the UL/DL configuration with 5ms switching point periodicity, type 1 subframe includes both subframe 2 and 7. However, if TDD UUDL reconfiguration includes the UL/DL configuration with 10ms switching point periodicity, type 1 subframe includes subframe 2.

- Type 2: flexible subframes in which transmission directions can be UL or DL depending on TDD UL/DL configurations, such as Subframes 3, 4, 7, 8, 9. If dynamic TDD UUDL reconfiguration is limited to the UL/DL configuration with 5ms switching point periodicity, type 2 subframe includes subframes 3,4,8,9. If dynamic TDD UUDL reconfiguration is limited to the UL/DL configuration with 10ms switching point periodicity, type 2 subframe includes subframes 3, 4. If dynamic TDD UUDL reconfiguration includes both UL/DL configurations with 5ms switching point periodicity and UUDL configurations with 10ms switching point periodicity, type 2 subframe includes subframes 3, 4, 7, 8, 9.

Therefore, in this embodiment, two types of subframes are defined for UL: fixed UL subframes that always have the fixed UL transmission direction are defined as Type 1; and flexible UL subframes in which transmission directions can be switched between UL and DL are defined as Type 2. Although seven TDD UUDL configurations are specified for LTE TDD, this embodiment may restrict some UUDL configurations for dynamic reconfiguration for simplicity. For example, if dynamic TDD UUDL reconfiguration is limited to the UUDL configuration with 5ms switching point periodicity, type 1 (fixed) subframe includes both subframe 2 and 7 while type 2 (flexible) subframe include subframe 3,4,8,9. If dynamic TDD UUDL reconfigurations is limited to the UL/DL configuration with 10ms switching point periodicity, type 1 (fixed) subframe includes subframe 2 while type 2 (flexible) subframe include subframe 3,4. If dynamic TDD UUDL reconfiguration includes both UL/DL configurations with 5ms switching point periodicity and UL/DL configurations with 10ms switching point periodicity, type 1 (fixed) subframe includes subframe 2 while type 2 (flexible) subframe include 3, 4, 7, 8, 9.

As a result, in this embodiment, the UE always knows the subframe type of the practically used TDD UL/DL configuration and no UUDL configuration exchange between neighboring cells is needed in order for the UE to know the subframe type. It is noted that, according to this embodiment, the types of some subframes is not changed after the TDD UUDL configuration is changed.

According to this embodiment, two different power control parameter sets (P0, alpha) are configured by high layer signaling for Type 1 and 2, respectively. For example, for subframe Type 1 (fixed), the power control parameter set can be set to Set 1 (P0:-80dBm, alpha: 0.6); and for subframe Type 2 (flexible), the power control parameter set can be set to Set 1 (P0: -70dBm, alpha: 0.8).

In this embodiment, two-bit TPC contained in DL grant or UL grant may be used for UL transmit power adjustment command. According to this embodiment, for Type 1 (fixed) subframe, the eNB indicates the TPC command in UL grant or DL grant for uplink transmit power adjustment and TPC command is set based on the specific power control parameter set for UL subframe Type 1 (fixed). For Type 2 (flexible) subframe, the eNB indicates the TPC command in UL grant or DL grant for uplink transmit power adjustment and TPC command is set based on the specific power control parameter set for UL subframe Type 2 (flexible).

In this embodiment, upon receiving the UL grant or DL grant, the UE can distinguish the corresponding UL subframe type according to the UL grant timing or DL HARQ timing, and then derive the needed UL transmit power with the indicated UL power control parameter set to transmit the PUSCH or PUCCH.

According to this embodiment, the setting of the UE Transmit power $P_{\text{PUSCH}}$ for PUSCH transmission in subframe $i$ is defined by:

if Subframe i is Type 1 (fixed) subframe,

$$P_{\text{PUSCH\_Type1}}(i) = \min\{P_{\text{CMAX}}, 10\log_{10}(M_{\text{PUSCH}}(i)) + P_{\text{O\_PUSCH\_Type1}}(j) + \alpha_{Type1}(j) \cdot PL + \Delta_{\text{TF}}(i) + f(i)\}$$
[dBm]

else if Subframe i is Type 2 (flexible) subframe,

$$P_{\text{PUSCH\_Type2}}(i) = \min\{P_{\text{CMAX}}, 10\log_{10}(M_{\text{PUSCH}}(i)) + P_{\text{O\_PUSCH\_Type2}}(j) + \alpha_{Type2}(j) \cdot PL + \Delta_{\text{TF}}(i) + f(i)\}$$
[dBm]

where $f(i)$ is defined by: $f(i)=f(i-1)+\delta_{PUSCH}(i-K_{PUSCH})$ if accumulation is enabled based on the UE-specific parameter *Accumulation-enabled* provided by higher layers; $f(i)=\delta_{\text{PUSCH}}(i-K_{\text{PUSCH}})$ if accumulation is not enabled based on the UE-specific parameter *Accumulation-enabled* provided by higher layers; and subframe $i$ and $i$-1 are in same subframe type set. In this example, $\delta_{\text{PUSCH}}$ is a UE specific correction value provided by UL grant or DL grant.

In this embodiment, if power adjustment accumulation is enabled, the accumulation should limit in the same type of UL subframe set.

Thus, the setting of the UE transmit power $P_{\text{PUCCH}}$ for PUCCH transmission in subframe i is defined according to subframe type and power control parameter set selection. It is similar to PUSCH power derivation, with the difference that alpha always is set to 1.0 for PUCCH.

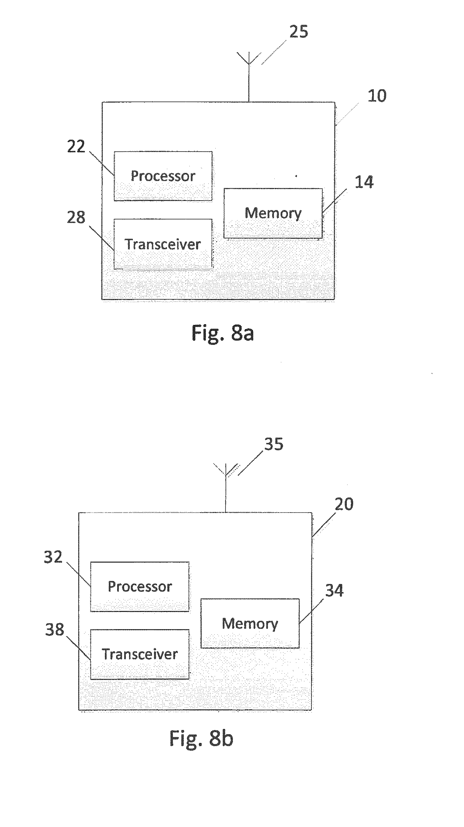

Fig. 8a illustrates an example of an apparatus 10 according to an embodiment. In one embodiment, apparatus 10 may be a base station, such as an eNB. It should be noted that one of ordinary skill in the art would understand that apparatus 10 may include components or features not shown in Fig. 8a. Only those components or feature necessary for illustration of the invention are depicted in Fig. 8a.

As illustrated in Fig. 8a, apparatus 10 includes a processor 22 for processing information and executing instructions or operations. Processor 22 may be any type of general or specific purpose processor. While a single processor 22 is shown in Fig. 8a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 further includes a memory 14, which may be coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

Apparatus 10 may also include one or more antennas 25 for transmitting and receiving signals and/or data to and from apparatus 10. Apparatus 10 may further include a transceiver 28 configured to transmit and receive information. For instance, transceiver 28 may be configured to modulate information on to a carrier waveform for transmission by the antenna(s) 25 and demodulates information received via the antenna(s) 25 for further processing by other elements of apparatus 10. In other embodiments, transceiver 28 may be capable of transmitting and receiving signals or data directly.

Processor 22 may perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 stores software modules that provide functionality when executed by processor 22. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

As mentioned above, according to one embodiment, apparatus 10 may be an eNB, for example. In an embodiment, apparatus 10 may be controlled by memory 14 and processor 22 to retrieve subframe type information for the apparatus' own cell and/or its neighbor cells. Example possibilities for the subframe type information are discussed above in detail. Apparatus 10 may then be controlled by memory 14 and processor 22 to indicate, using physical layer signaling, the subframe type information and corresponding power control parameter set selection to a UE. In one embodiment, apparatus 10 may reuse bits of the TPC to indicate the subframe type information and corresponding power control set to the UE. As outlined above, one example includes reusing two bits of the TPC, with one bit used to indicate the subframe type and a second bit used to indicate the power control parameter set. According to an embodiment, apparatus 10 may be further controlled by memory 14 and processor 22 to selectively accumulate power adjustment over a set of subframes with the same subframe type.

Fig. 8b illustrates an example of an apparatus 20 according to another embodiment. In an embodiment, apparatus 20 may be a UE. It should be noted that one of ordinary skill in the art would understand that apparatus 20 may include components or features not shown in Fig. 8b. Only those components or feature necessary for illustration of the invention are depicted in Fig. 8b.

As illustrated in Fig. 8b, apparatus 20 includes a processor 32 for processing information and executing instructions or operations. Processor 32 may be any type of general or specific purpose processor. While a single processor 32 is shown in Fig. 8b, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 20 further includes a memory 34, which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 can be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

Apparatus 20 may also include one or more antennas 35 for transmitting and receiving signals and/or data to and from apparatus 20. Apparatus 20 may further include a transceiver 38 configured to transmit and receive information. For instance, transceiver 38 may be configured to modulate information on to a carrier waveform for transmission by the antenna(s) 35 and demodulates information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

As mentioned above, according to one embodiment, apparatus 20 may be a UE. In this embodiment, apparatus 20 may be controlled by memory 34 and processor 32 to receive, from an eNB, subframe type information for the eNB's own cell and/or its neighbor cells and corresponding power control parameter set selection. In one embodiment, the subframe type information and corresponding power control set may be received by apparatus 20 via reused bits of the TPC. Apparatus 20 may be further controlled by memory 34 and processor 32 to derive required UL transmit power with the received power control parameter set, and to transmit on PUSCH or PUCCH using the derived transmit power.

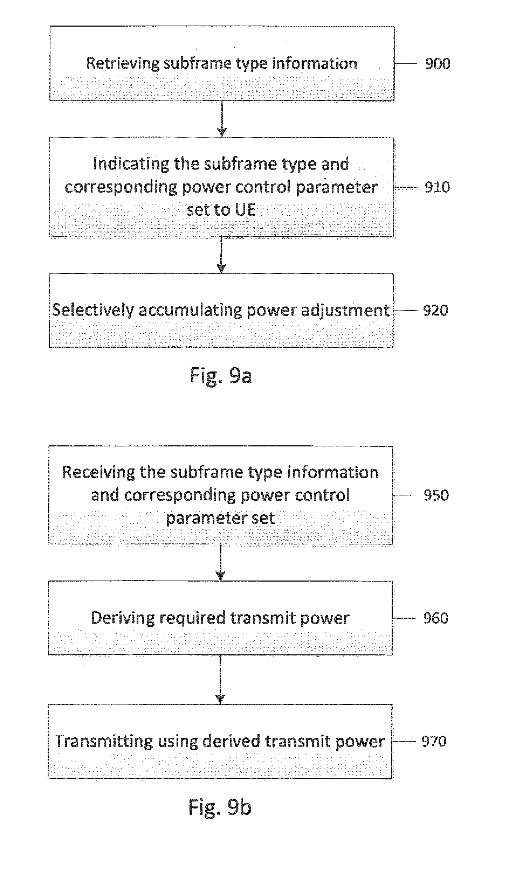

Fig. 9a illustrates an example of a flow diagram of a method, according to one embodiment. In an embodiment, the method of Fig. 9a may be performed by an eNB. The method may include, at 900, defining and/or retrieving subframe type(s) for the eNB's own cell and/or its neighbor cells. Example possibilities for the subframe type(s) are discussed above in detail. The method may then include, at 910, indicating, for example using physical layer signaling, the subframe type information and corresponding power control parameter set selection to a UE. In one embodiment, the indicating may include reusing bits of the TPC to indicate the subframe type information and corresponding power control set to the UE. As outlined above, one example includes reusing two bits of the TPC, with one bit used to indicate the subframe type and a second bit used to indicate the power control parameter set. According to an embodiment, the method may further include, at 920, selectively accumulating power adjustment over a set of subframes with the same subframe type.

Fig. 9b illustrates an example of a flow diagram of a method, according to one embodiment. In an embodiment, the method of Fig. 9b may be performed by a UE. The method may include, at 950, receiving, from an eNB, subframe type information for the eNB's own cell and/or its neighbor cells and a corresponding power control parameter set selection. In one embodiment, the receiving of the subframe type information and corresponding power control set may include receiving via reused bits of the TPC. The method may further include, at 960, deriving required UL transmit power with the received power control parameter set, and, at 970, transmitting on PUSCH or PUCCH using the derived transmit power.

In some embodiments, the functionality of any of the methods described herein, such as those illustrated in Figs. 9a and 9b discussed above, may be implemented by software and/or computer program code stored in memory or other computer readable or tangible media, and executed by a processor. In other embodiments, the functionality may be performed by hardware, for example through the use of an application specific integrated circuit (ASIC), a programmable gate array (PGA), a field programmable gate array (FPGA), or any other combination of hardware and software.

In view of the above, embodiments enable the eNB to adjust the uplink transmit power in a larger dynamic range to overcome the interference fluctuation. In that sense, UL performance can be improved. As a result, embodiments can improve UL performance by overcoming the eNB-to-eNB interference. Meanwhile, the corresponding ACK/NACK feedback reliability in uplink can be guaranteed.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

**Claims**

1.   A method, comprising:

   retrieving, by an eNB, subframe type information in connection with uplink (UL)/downlink (DL) configuration; and
   simultaneously indicating, using physical layer signaling, at least one of the subframe type information and/or corresponding power control parameter set to a user equipment.

2.   The method according to claim 1, wherein the retrieving comprises dynamically concurrently retrieving the subframe type information for a cell of the eNB and for neighbor cells of the eNB.

3.   The method according to any of claims 1 or 2, wherein the indicating comprises indicating at least one of the subframe type information and/or the corresponding power control parameter set in a transmit power command (TPC).

4.   The method according to any of claims 1-3, further comprising selectively accumulating power adjustment over a set of subframes with a same subframe type.

5.   The method according to any of claims 1-4, wherein the subframe type information comprises non-conflicting subframes and/or conflicting subframes.

6.   The method according to claim 5, wherein two different parameter sets (P0, alpha) are configured by high layer signaling for each subframe type.

7.   The method according to claim 5,
   wherein time division duplex (TDD) uplink/downlink configurations are exchanged periodically in synchronized or asynchronized manner between neighboring cells in order to know the subframe type information, or wherein the subframe type information is obtained by the eNB measuring.

8. An apparatus, comprising:

at least one processor; and
at least one memory comprising computer program code,
the at least one memory and the computer program code configured, with the at least one processor, to cause the apparatus at least to
retrieve subframe type information in connection with uplink (UL)/downlink (DL) configuration; and
simultaneously indicate, using physical layer signaling, at least one of the subframe type information and/or corresponding power control parameter set to a user equipment.

9. The apparatus according to claim 8, wherein the at least one memory and the computer program code are further configured, with the at least one processor, to cause the apparatus to dynamically concurrently retrieve the subframe type information for a cell of the apparatus and for neighbor cells of the apparatus.

10. The apparatus according to any of claims 8 or 9, wherein the at least one memory and the computer program code are further configured, with the at least one processor, to cause the apparatus to indicate at least one of the subframe type information and/or the corresponding power control parameter set in a transmit power command (TPC).

11. The apparatus according to any of claims 8-10, wherein the at least one memory and the computer program code are further configured, with the at least one processor, to cause the apparatus to selectively accumulate power adjustment over a set of subframes with a same subframe type.

12. The apparatus according to any of claims 8-11, wherein the subframe type information comprises non-conflicting subframes and/or conflicting subframes.

13. The apparatus according to claim 12, wherein two different parameter sets (P0, alpha) are configured by high layer signaling for each subframe type.

14. The method according to any of claims 8-11, wherein the subframe type information comprises fixed subframes and/or flexible subframes.

15. The apparatus according to claim 14, wherein four different power control parameter sets (P0, alpha) are configured by high layer signaling for the flexible subframes, and one of the four different power control parameter sets are configured for the fixed subframes.

16. A computer-readable medium encoded with instructions that, when executed in hardware, perform a process according to any of claims 1-7.

17. A method, comprising:

receiving from an eNB, by a user equipment, at least one of an indication of subframe type information and/or indication of corresponding power control parameter set;
deriving required uplink (UL) transmit power based on the received power control parameter set and the corresponding power control parameter set; and
transmitting on physical uplink shared channel (PUSCH) or physical uplink control channel (PUCCH) using the derived UL transmit power.

18. The method according to claim 17, wherein the receiving comprises receiving the subframe type information for a cell of the eNB and for neighbor cells of the eNB.

19. The method according to any of claims 17 or 18, wherein the receiving comprises receiving the at least one of the indication of the subframe type information and/or the corresponding power control parameter set in a transmit power command (TPC).

20. An apparatus, comprising:

at least one processor; and
at least one memory comprising computer program code,

the at least one memory and the computer program code configured, with the at least one processor, to cause the apparatus at least to

receive, from an eNB, at least one of an indication of subframe type information and/or indication of corresponding power control parameter set;

derive required uplink (UL) transmit power based on the received power control parameter set and the corresponding power control parameter set; and

transmit on physical uplink shared channel (PUSCH) or physical uplink control channel (PUCCH) using the derived UL transmit power.

21. The apparatus according to claim 20, wherein the at least one memory and the computer program code are further configured, with the at least one processor, to cause the apparatus to receive the subframe type information for a cell of the eNB and for neighbor cells of the eNB.

22. The apparatus according to any of claims 20 or 21, wherein the at least one memory and the computer program code are further configured, with the at least one processor, to cause the apparatus to receive the at least one of the indication of the subframe type information and/or the indication of the corresponding power control parameter set in a transmit power command (TPC).

23. A computer-readable medium encoded with instructions that, when executed in hardware, perform a process according to any of claims 17-19.

| UL/DL configuration | Switching-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Fig. 1

Serving link

UL-DL interference

|  | 0 | 1 | 2 | 3 | 4 | 5 | 6 | 7 | 8 | 9 |
|---|---|---|---|---|---|---|---|---|---|---|
| Cell 1: TDD Conf#2 | D | S | U | D | D | D | S | U | D | D |
| Cell 2: TDD Conf#1 | D | S | U | U | D | D | S | U | U | D |

Fig. 2

|   | 0 | 1 | 2 | 3 | 4 | 5 | 6 | 7 | 8 | 9 |
|---|---|---|---|---|---|---|---|---|---|---|
| Cell 1: TDD Conf#2 | D | S | U | D | D | D | S | U | D | D |
| Cell 2: TDD Conf#1 | D | S | U | U | D | D | S | U | U | D |

Fig. 3

|   | 0 | 1 | 2 | 3 | 4 | 5 | 6 | 7 | 8 | 9 |
|---|---|---|---|---|---|---|---|---|---|---|
| Cell 1: TDD Conf#3 | D | S | U | U | U | D | D | D | D | D |
| Cell 2: TDD Conf#1 | D | S | U | U | D | D | S | U | U | D |

Fig. 4

| Bit | value | indication |
|---|---|---|
| MSB | 0 | Subframe Type 1 |
|  | 1 | Subframe Type 2 |
| LSB | 0 | PC parameter set 1 for selected Type |
|  | 1 | PC parameter set 2 for selected Type |

Fig. 5

| 0 | 1 | 2 | 3 | 4 | 5 | 6 | 7 | 8 | 9 |
|---|---|---|---|---|---|---|---|---|---|
| D | S | U | F | F | D | S/D | F | F | F |

Fig. 6

| Bit value | Indication |
|-----------|------------|
| 0, 0 | PC parameter set 1 for Type 2 |
| 0, 1 | PC parameter set 2 for Type 2 |
| 1, 0 | PC parameter set 3 for Type 2 |
| 1, 1 | PC parameter set 4 for Type 2 |

Fig. 7

Fig. 8a

Fig. 8b

Retrieving subframe type information —— 900

Indicating the subframe type and
corresponding power control parameter —— 910
set to UE

Selectively accumulating power adjustment —— 920

Fig. 9a

Receiving the subframe type information
and corresponding power control —— 950
parameter set

Deriving required transmit power —— 960

Transmitting using derived transmit power —— 970

Fig. 9b

Europäisches
Patentamt

European
Patent Office

Office européen
des brevets

**EUROPEAN SEARCH REPORT**

Application Number

EP 14 16 3309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/014332 A1 (NOKIA CORP [FI]; RIBEIRO CASSIO BARBOZA [FI]; KORHONEN JUHA SAKARI [FI]) 31 January 2013 (2013-01-31)<br>* paragraph [0037] *<br>* paragraph [0042] - paragraph [0047] *<br>* paragraph [0059] - paragraph [0069] *<br>----- | 1-23 | INV.<br>H04W52/14<br>H04W52/24<br>H04W52/32<br>H04W72/04<br>H04W72/12<br>H04W52/58 |
| X | WO 2013/004007 A1 (RENESAS MOBILE CORP [JP]; HAN JING [CN]; GAO CHUNYAN [CN]; WANG HAIMIN) 10 January 2013 (2013-01-10)<br>* page 10 - page 17 *<br>* page 22 - page 23 *<br>----- | 1-23 | H04W52/08<br>H04W72/14<br>H04W92/16<br>H04W52/10<br>H04W52/22 |
| X | QUALCOMM INCORPORATED: "Interference mitigation schemes",<br>3GPP DRAFT; R1-130586 INTERFERENCE MITIGATION SCHEMES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG1, no. St. Julian; 20130128 - 20130201<br>19 January 2013 (2013-01-19), XP050663842,<br>Retrieved from the Internet:<br>URL:http://www.3gpp.org/ftp/tsg_ran/WG1_RL 1/TSGR1_72/Docs/<br>[retrieved on 2013-01-19]<br>* page 3 - page 4 *<br>----- | 1-23 | |

TECHNICAL FIELDS
SEARCHED      (IPC)

H04W

The present search report has been drawn up for all claims

| Place of search | Date of completion of the search | Examiner |
|---|---|---|
| The Hague | 17 June 2014 | Sklavos, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 3309

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2014

| Patent document cited in search report | Publication date | Patent family member(s) | Publication date |
|---|---|---|---|
| WO 2013014332 A1 | 31-01-2013 | CN 103718621 A<br>EP 2737757 A1<br>KR 20140043494 A<br>US 2014133366 A1<br>WO 2013014332 A1 | 09-04-2014<br>04-06-2014<br>09-04-2014<br>15-05-2014<br>31-01-2013 |
| WO 2013004007 A1 | 10-01-2013 | DE 112011105358 T5<br>US 2014161003 A1<br>WO 2013004007 A1 | 13-03-2014<br>12-06-2014<br>10-01-2013 |

EPO FORM P0459

For more details about this annex : see Official Journal of the European Patent Office, No. 12/82